# EUROPEAN PATENT SPECIFICATION

(11) **EP 1 750 044 B1**
(45) Date of publication and mention of the grant of the patent: **24.06.2009**
(21) Application number: 06014815.2
(22) Date of filing: 17.07.2006
(51) Int. Cl.: F16K 31/60

(54) **Valve with snap-connection between handle and stem**
Ventil mit Schnappverbindung zwischen Betätigungsgriff und Ventilspindel
Soupape avec connexion à encliquetage entre poignée et tige de soupape

(30) Priority: 05.08.2005 IT MI20050293 U
(43) Date of publication of application: 07.02.2007
(73) Proprietor: Effebi S.p.A., 25073 Bovezzo BS (IT)
(72) Inventor: Tanghetti, Ermanno, 25073 Bovezzo (BS) (IT)
(74) Representative: Marietti, Giuseppe

(56) References cited:
- AU-B2- 469 175
- DE-C- 708 740
- DE-C- 856 083
- GB-A- 1 196 747
- GB-A- 1 324 178
- US-A- 1 391 012

## Description

The present invention relates to a valve with an operating knob (i.e. an actuation handle) that can be snap-connected to the manoeuvring stem.

It should be observed that herein and below, with "valve" is meant a device operating within a fluid network suitable for intercepting or dosing the flow rate of the fluid circulating therein. Said valve is provided with a central body having two or more inlet/outlet ways for the work fluid and comprising, as is known, a plugging element that can be integrally connected to a pivoting manoeuvring stem for providing the motion of the valve. The manoeuvring stem is in turn, connected to an operating knob, which allows the shut-off member to be manually rotated. Thereby, by acting on the knob connected to the stem, the operator is capable of either allowing, preventing or adjusting the liquid flow through the valve.

In common practice, the connection between the operating knob and the manoeuvring stem takes place by means of a male female coupling being provided at the respective end portions, while the knob is firmly fixed to the manoeuvring stem by means of a threaded element. The angular positioning of the knob relative to the manoeuvring stem is facilitated by grooved elements being provided on the respective end portions, which prove to be particularly useful when the travel of the operating knob has to be defined based on the type of plugging element used.

It should be understood that the operation of engaging/disengaging the knob to/from the valve manoeuvring stem is quite slow and sometimes particularly difficult to carry out, as it requires screwing/unscrewing the threaded connecting element.

Document GB-A-1196747 discloses a control knob for which comprises a moulded plastics body having a cylindrical bore the periphery of which has moulded into it a steel circlip which is arranged to snap into engagement with a circumferential groove provided in a spindle when the knob is fitted thereon.

Document AU-B-469175 a valve spindle-handle assembly comprising a spindle having a fluted end and an annular groove adjacent to said fluted end, and a sleeve of resilient material that has internal grooves and ridges which when pushed over the spindle end engage the flutes of the spindle. Further the sleeve has an inwardly projecting ridge designed to engage by a nap-connection the annular groove in the spindle. The handle has an aperture for housing the sleeve and avoiding any relative rotating movement between handle and sleeve.

The object of the present invention is thus to facilitate and speed up the connection between the operating knob and the manoeuvring stem.

It is accordingly an object of the present invention to meet this requirement by providing a valve according to claim 1.

Further characteristics and advantages of the present invention will appear more clearly from the detailed description of a preferred, though not exclusive, embodiment of a valve with an operating knob that can be connected to the stem in a revolving manner relative thereto, in which:

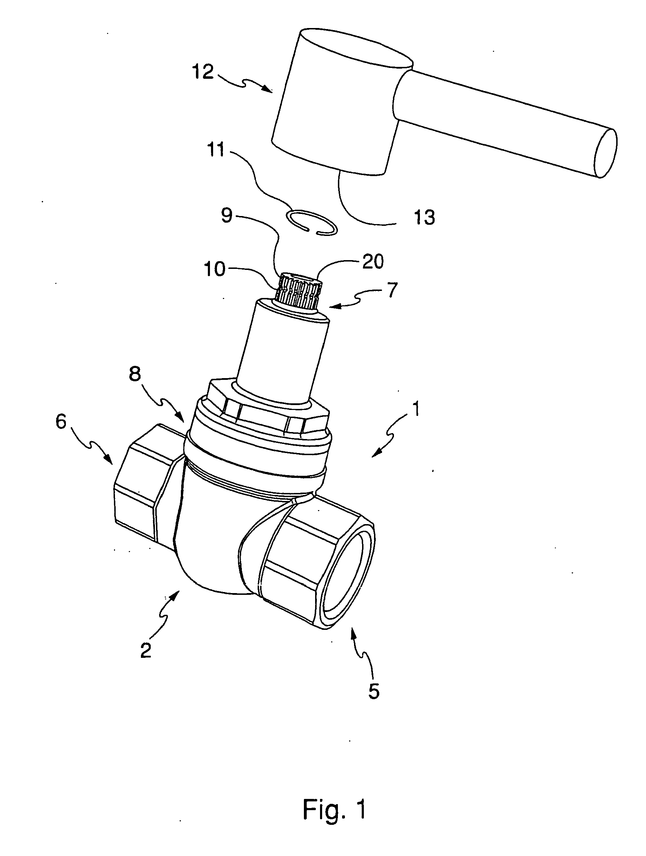

- Fig. 1 is an exploded view of the valve according to the invention;

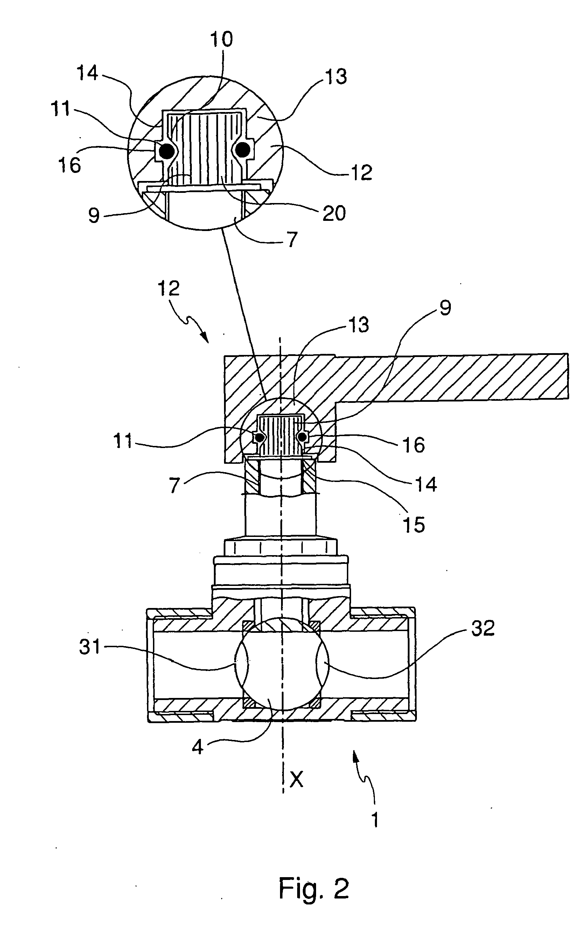

- Fig. 2 is a sectional view of the valve from Fig. 1.

With reference to the figures, the valve according to the invention has been designated with **1.**

According to the known technique, the valve **1** comprises an internally hollow valve body **2,** having a substantially cylindrical shape, and accommodating, at about half the length thereof, a plugging (e.g., spherical) element **4** that is provided with suitable openings **31, 32** for providing fluidic connection between the inlet port **5** and the outlet port **6** of the valve **1.** The plugging element **4** is connected to a substantially cylindrical manoeuvring stem **7,** which runs within a cylindrical tubular element **8** connected to said valve body **2** and extending therefrom at about half the length thereof.

The substantially cylindrical terminal portion **20** of the stem **7** is provided with grooved radial elements **9,** the so-called splines, which extend longitudinally to the axis x of the valve **1.**

Substantially at half the length of said grooved elements **9** there is formed a round coupling seat **10,** which is placed perpendicular to the manoeuvring stem **7** and is capable of accommodating a holding element **11.**

In the preferred embodiment illustrated herein, the holding element **11** has an open annular shape, and is made of elastically deformable metallic material.

The valve **1** further comprises an operating knob **12** (i.e. an actuation handle) that is provided with a hollow and substantially cylindrical end portion **13,** grooved elements **15** being provided on the side skirt **14** thereof, which can be shape-coupled with the grooved elements **9** provided on the terminal portion **20** of the manoeuvring stem **7.**

Furthermore, advantageously, about at half the length of the grooved elements **15** of the knob **12,** there is provided a round housing seat **16** that is placed crosswise relative to the end portion **13** of the knob **12** and accommodating the holding element **11.** Furthermore, the housing seat **16** is of such size that the holding element **11** is housed therein with a certain clearance, and may be allowed to undergo a slight radial deformation. According to the preferred embodiment of the invention as shown herein, the housing seat **16** has a rectangular section.

The terminal portion **20** of the stem **7** further has transversal dimensions slightly lower than the ones of the end portion **13** of the operating knob **12** thus allowing a shape-coupling to take place between each other. It should be noted that, while a particular embodiment of a valve **1** has been described herein, in which the terminal portion **20** of the stem **7** is substantially the connecting male element and the end portion **13** of the operating knob **12** is substantially the connecting female element, a second embodiment of the valve **1,** not illustrated herein, in which the terminal portion **20** of the manoeuvring stem **7** is substantially the female element and the end portion **13** of the knob **12** is substantially the male element, yet implements the technical solution as claimed herein.

The proper mutual angular position is defined prior to connecting the knob **12** to the manoeuvring stem **7.** The knob **12** is then connected to the stem **7** thanks to the sliding of the end portion **13** of the knob **12** along the terminal portion **20** of the stem **7**; during said operation the grooved elements **9** and **15** guide the knob **12** fitting on the manoeuvring stem **7** and avoid any further rotation relative to each other.

During the step of coupling the end portion **13** of the knob **12** to the terminal portion **20** of the stem **7,** the holding element **11,** by being provided with slightly lower transversal dimensions than those of the terminal portion **20** of the stem **7,** slides on the latter and is elastically deformed. As soon as the holding element **11** is placed at the coupling seat **10** of the stem **7,** it moves back to the initial undeformed configuration, or otherwise, to a new deformed configuration into engagement with the coupling seat **10.**

The knob **12** is thus firmly, though not permanently, fastened to the manoeuvring stem **7.**

The disengagement of the knob **12** from the stem **7** is obtained by applying a pulling force on the knob **12** such as to deform the holding element **11,** thus causing the latter to return to the same deformed configuration as in the coupling step.

The embodiment illustrated herein cannot be considered as limiting the present invention. In fact, a second embodiment of the invention in which the holding element **11** is housed on the stem **7** rather than on the knob **12** yet implements the technical solution as claimed herein. In this second embodiment, the coupling seat **10** is provided on the end portion **13** of the knob **12,** while the housing seat **16** for the holding element **11** is provided on the terminal portion **20** of the stem **7.**

Practically, the invention herein described has been found to achieve the proposed objects.

The invention thus conceived is susceptible of numerous modifications and variations, all of which are within the scope of the appended claims.

In practice, the materials used, as well as the shapes and sizes may be any according to the requirements, without however departing from the scope of the following claims.

## Claims

1. A valve (1) comprising a central body (2) provided with several fluid inlet/outlet ways (5,6), a stem (7) provided with at least one terminal portion (20) and an operating knob (12) provided with an end portion (13) to be coupled to said at least one terminal portion (20) of the stem (7) by means of one or more grooved elements (9,15), **said** end portion (13) of the knob (12) and/or terminal portion (20) of the stem (7) comprising at least one housing seat (16) accommodating at least one holding means (11), said holding means (11) can be snap-engaged on at least one coupling seat provided on the terminal portion (20) of the stem (7) and/or end portion (13) of the knob (12), respectively, **characterized in that** said holding means is an open ring (11), said housing seat (16) being of such size that the holding means (11) is housed therein with a certain clearance.

2. The valve according to claim 1, **characterized in that** said at least one holding means is made of metal.

3. The valve according to claim 2, **characterized in that** said at least one holding means can be elastically deformed.

4. The valve according to any preceding claim, **characterized in that** said at least one coupling seat is round.

5. The valve according to any preceding claim, **characterized in that** said at least one housing seat has a rectangular section.

6. The valve according to any preceding claim, **characterized in that** said one or more grooved elements are straight and extend parallel to the axis of the stem.

7. The valve according to any preceding claim, **characterized in that** said at least one terminal portion of said stem is substantially cylindrical.

8. The valve according to any preceding claim, **characterized in that** said at least one end portion of said knob is substantially cylindrical and hollow.

## Patentansprüche

1. Ein Ventil (1) mit einem zentralen Gehäuse (2), das mit mehreren Ein- und Auslässen (5, 6) für ein Fluid ausgestattet ist, einer Ventilspindel (7), die mit zumindest einem endständigen Abschnitt (20) ausgestattet ist, und einem Betätigungsgriff (12) mit einem Endbereich (13), der mit Hilfe von einem oder mehreren gerillten Elementen (9, 15) an den zumindest einen endständigen Abschnitt (20) der Ventilspindel (7) gekoppelt wird, wobei der Endbereich (13) des Griffes (12) und/oder der endständige Abschnitt (20) der Ventilspindel (7) zumindest eine Aufnahme (16) enthält, in der zumindest ein Haltemittel (11) untergebracht ist, wobei das Haltemittel (11) auf dem zumindest einen Kopplungssitz einrasten kann, der entsprechend auf dem endständigen Abschnitt (20) der Ventilspindel (7) und/oder auf dem Endbereich (13) des Griffes (12) angebracht ist, **dadurch gekennzeichnet, dass** das Haltemittel ein offener Ring (11) ist, und die Aufnahme (16) so dimensioniert ist, dass das Haltemittel (11) darin mit einem gewissen Spiel untergebracht ist.

2. Das Ventil gemäß Anspruch 1, **dadurch gekennzeichnet, dass** das zumindest eine Haltemittel aus Metall gefertigt ist.

3. Das Ventil gemäß Anspruch 2, **dadurch gekennzeichnet, dass** das zumindest eine Haltemittel elastisch verformt werden kann.

4. Das Ventil gemäß irgend einem vorherigen Anspruch, **dadurch gekennzeichnet, dass** der zumindest eine Kopplungssitz rund ist.

5. Das Ventil gemäß irgend einem vorherigen Anspruch, **dadurch gekennzeichnet, dass** die zumindest eine Aufnahme einen rechteckigen Querschnitt aufweist.

6. Das Ventil gemäß irgend einem vorherigen Anspruch, **dadurch gekennzeichnet, dass** das eine gerillte Element oder die mehreren gerillten Elemente gerade sind und parallel zur Achse der Spindel verlaufen.

7. Das Ventil gemäß irgend einem vorherigen Anspruch, **dadurch gekennzeichnet, dass** der zumindest eine endständige Abschnitt der Spindel im wesentlichen zylindrisch ist.

8. Das Ventil gemäß irgend einem vorherigen Anspruch, **dadurch gekennzeichnet, dass** der zumindest eine Endbereich des Griffes im wesentlichen zylindrisch und hohl ist.

## Revendications

1. Soupape (1) comprenant un corps central (2) doté de plusieurs voies d'entrée/sortie de fluide (5, 6), une tige (7) dotée d'au moins une portion d'extrémité (20) et un bouton de commande (12) doté d'une portion d'extrémité (13), à raccorder à ladite portion d'extrémité (20) de la tige (7), au moyen d'un ou plusieurs éléments cannelés (9, 15), ladite portion d'extrémité (13) du bouton (12) et/ou la portion d'extrémité (20) de la tige (7) comprenant au moins un logement (16) recevant au moins un système de retenue (11), ledit système de retenue (11) peut être mis en prise par encliquetage sur au moins un logement de couplage réalisé sur la portion d'extrémité (20) de la tige (7) et/ou la portion d'extrémité (13) du bouton (12), respectivement, **caractérisée en ce que** ledit système de retenue est une bague ouverte (11), ledit logement (16) étant d'une taille telle que le système de retenue (11) est abrité à l'intérieur avec un certain jeu.

2. Soupape selon la revendication 1, **caractérisée en ce que** ledit système de retenue est réalisé en métal.

3. Soupape selon la revendication 2, **caractérisée en ce que** ledit système de retenue peut être élastiquement déformé.

4. Soupape selon l"une quelconque des revendications précédentes, **caractérisé en ce que** ledit logement de couplage est rond.

5. Soupape selon l"une quelconque des revendications précédentes, **caractérisée en ce que** ledit logement a une section rectangulaire.

6. Soupape selon l'une quelconque des revendications précédentes, **caractérisée en ce que** lesdits éléments cannelés sont droits et s'étendent parallèlement à l'axe de la tige.

7. Soupape selon l'une quelconque des revendications précédentes, **caractérisée en ce que** ladite portion d'extrémité de ladite tige est sensiblement cylindrique.

8. Soupape selon l'une quelconque des revendications précédentes, **caractérisée en ce que** ladite portion d'extrémité dudit bouton est sensiblement cylindrique et creuse.
